# EUROPEAN PATENT APPLICATION

(11) **EP 4 837 647 A1**
(43) Date of publication of application: **11.11.2026**
(21) Application number: 25174156.7
(22) Date of filing: 05.05.2025
(51) Int. Cl.: B01D 39/12, B01D 39/20

(54) **FILTER MEDIA STRUCTURE**

(71) Applicant: NV Bekaert SA, 8550 Zwevegem (BE)
(72) Inventor: VANDENDIJK, Stefan, 8550 Zwevegem (BE); GOUX, Aurelie, 8550 Zwevegem (BE); VAN LANDUYT, Sam, 8550 Zwevegem (BE)
(74) Representative: Serwas, Harry

(57) **Abstract**

A layered filter media structure (10) comprising at least the following layer: a) a first wire mesh, b) a first layer (12), comprising a non-woven web of metal fibers, c) a second layer, being a woven Dutch weave, d) a second wire mesh. The layered filter media structure has the advantage of lower pressure drops and extended lifetime.

## Description

### Technical Field

The present invention relates to a layered filter media structure which is adapted for filtration purposes.

### Background Art

Presently available filter material for filtration applications and for in situ cleanable filtration media conveniently comprise ceramic membrane layers fixed to the surface of porous sintered metal powder or metal fiber substrates. The high pressure drop across these filter laminates, however, is a considerable drawback since the filtering process requires additional energy due to the high pressure and robust mechanical supports for the filter layers. In addition, repeated back-flushing is difficult and, after all, the ceramic layers are quite brittle, which adversely affects durability. Metal meshes are also taken as back up mesh used to maintain filtration efficiency to a minimal level. The filter media structure after cleaning is tested using Bubble Point. The backup mesh shall guarantee the Bubble Point. On the other hand, this back up mesh shall have no or little influence on other properties, e.g. in the back flow test (also known as 10L/min test), of the filter media structure.

### Summary of the invention

It is an object of the present invention to avoid the drawbacks of the prior art.

It is also an object of the present invention to provide a filter media structure adapted for microfiltration without causing high pressure drops across the structure.

It is still another object of the present invention to provide a filter media structure which allows for repeated back-flushing.

According to a first aspect of the present invention, there is provided a layered filter media structure comprising at least a first wire mesh, a first layer, a second layer, and a second wire mesh. Wherein, the first layer comprises a non-woven web of metal fibers and the second layer is a woven Dutch weave. According to the invention, the first wire mesh and the first layer are non-sintered, the first layer and the second layer are sintered together, and the second layer and the second wire mesh are non-sintered.

Dutch weave is obtained by interlacing of small diameter corrugated wires closely jointed woven between bigger diameter wires not corrugated and not jointed. Its high density of wires gives it a higher mechanical strength. The Dutch weave according to the invention can be a plain Dutch weave, a Twill Dutch weave, a Reverse Dutch Twill weave or a reverse Dutch weave.

Plain Dutch weave has from 10 % to 25 % porosity with coarse opening of about 100 micron and smallest opening of about 5 micron. Dutch weave according to the present invention preferably are plain Dutch weaves including high flow alternatives. High flow plain Dutch weave is defined according to a special calculated plain Dutch weave, whereby calculation 40% porosity are guaranteed for all weaves.

According to the present invention, the non-woven web of metal fibers can be initially in green state, i.e. it is not sintered before it is sintered together with a woven Dutch weave as the second layer. However, preferably, the non-woven web of metal fibers has been double sintered, i.e. the non-woven web of metal fibers has been sintered before it is sintered together with a woven Dutch weave. The first layer and the second layer are sintered together. Sintering is a process in which powder or fiber particles are joined together through diffusion reaction. Sintering is beneficial for producing high-strength materials, improving mechanical properties, and enabling cost-effective mass production. It is advantage of the invention to have sintered first layer and second layer to effectively reduce viscosity by shear thinning effect due to adding sintered Dutch weave layer.

It is noted that sintering Dutch weave and wire mesh can induce a loss of porosity, e.g. about 5 %. According to the present invention, the first wire mesh and the first layer are non-sintered, and the second layer and the second wire mesh are non-sintered. Thus, the porosity and structure of the invention filter media is maintained and stable. **In** addition, it avoids some disadvantages of sintering, including long processing times, high energy consumption, and the inability to reuse molds, which can increase costs. **It** additionally brings possibilities to select and change different combination of wire mesh with fiber filter media according to the need of real applications. **It** brings more flexibility to change consumable parts that require frequent replacement.

**The** first layer preferably has a weight ranging from 300 g/m² to 600 g/m² so that its thickness is limited to a range of between 0.05 mm to 0.15 mm. Generally, the pressure drop over a filter is about proportional to its thickness. In this case, the limited thickness of the first layer limits the resultant pressure drop to an acceptable degree. The non-woven web of metal fibers may have a porosity below 90%. The first layer comprises metal fibers with a diameter of less than 10 µm.

Moreover, the first layer can comprise a first sub-layer and a second sub-layer. Wherein, the first sub-layer can have a porosity below 55 % and the second sub-layer can have a porosity at least 80 %. The first sub-layer comprises metal fibers with a diameter of less than 3 µm, e.g. less than 2.5 µm, e.g. 2 µm, and the second sub-layer comprises metal fibers with a diameter of at least three times the diameter of the fibers in the first sub-layer. The first sub-layer with the lower porosity determines the filter rating, i.e. the size of the particles the majority of which still pass the filter. The degree of pressure drop over the second sub-layer is considerably lower than the pressure drop over the first sub-layer due to the greater porosity of the second sub-layer. So the total pressure drop over the whole filter media structure is about equal to the limited pressure drop over the first sub-layer. An incoming fluid is immediately able to expand in the second sub-layer once it has passed the first layer.

In order to obtain the difference in porosity between the first sub-layer and the second sub-layer, the first sub-layer is sintered and compacted separately and in advance. Only thereafter, this sintered and compacted first sub-layer is brought in contact with the second sub-layer and a second sintering operation takes place to sinter the fibers in the second sub-layer and to bond the two layers together.

The first layer can be obtainable by means of a cold isostatic pressing operation. A cold isostatic pressing operation is to be preferred for the compacting operation of the first layer, since this allows obtaining a homogeneous filter medium. Cold isostatic pressing, however, leads to a slightly rough surface and not to an even and smooth surface. Preference is here given to a cold isostatic pressing operation where the pressure is applied from one side and where the other side of the layer rests on an even and smooth support in order to obtain an even and smooth surface.

Preferably a wire mesh is fixed as support to the first layer and the second layer. Most preferably, a first wire net fixed at the first layer is at the inlet side and a second wire net fixed at the second layer is at the outlet side. The meshes of the first wire mesh can be smaller than the meshes of the second wire mesh. The diameters of the wires of the first wire mesh can be smaller than the diameters of the wires of the second wire mesh. The first wire mesh and/ or the second wire mesh can be a calendered wire mesh.

Next to the function of support, the first wire mesh still has another function and advantage. This first wire net generates some turbulence in the incoming flow, which improves the anti-fouling behavior.

The filter media structure of the invention has superior properties over traditional surface filtration media or depth filtration media. According to the invention, the two outside wire meshes as support meshes withstand pressure differential involved. The non-woven first layer are preferably sintered so that particles are trapped inside sintered fibers and gels (deformable particles) are also trapped. The Dutch weave in the layered filter media structure of the invention can provide improved bubble point after long-term use and multiple cleanings. On the other hand, if any material (hard not gel) is loose, it will be blocked at Dutch weave. Preferably, the Dutch weave has high porosity and thus the efficiency of the layered filter media structure is similar to that without Dutch weave.

The layered filter media structure according to the present invention is in particular suitable for filtering recycled polymer, e.g. recycled polyester. In case of filtering a in vacuum post-processed polyester, the invention filter media structure has advantages thanks to its robustness in a high viscosity environment.

### Brief Description of Figures in the Drawings

The following detailed description makes reference to the accompanying drawings, in which:
Fig. 1 shows an enlarged view of a cross-section of a layered filter media structure according to the invention.
Fig. 2.1 to 2.10 shows schematic views of wire meshes and Dutch weaves that can be applied in the present invention.
Fig. 3 shows spin pack pressure (in bar) over time (in hour) of an invention filter media structure in comparison with two other referenced filter media structures.

### Mode(s) for Carrying Out the Invention

The following description will be based on a preferred embodiment of the invention. As will be evident to the skilled person, however, the invention is not restricted to this particular embodiment.

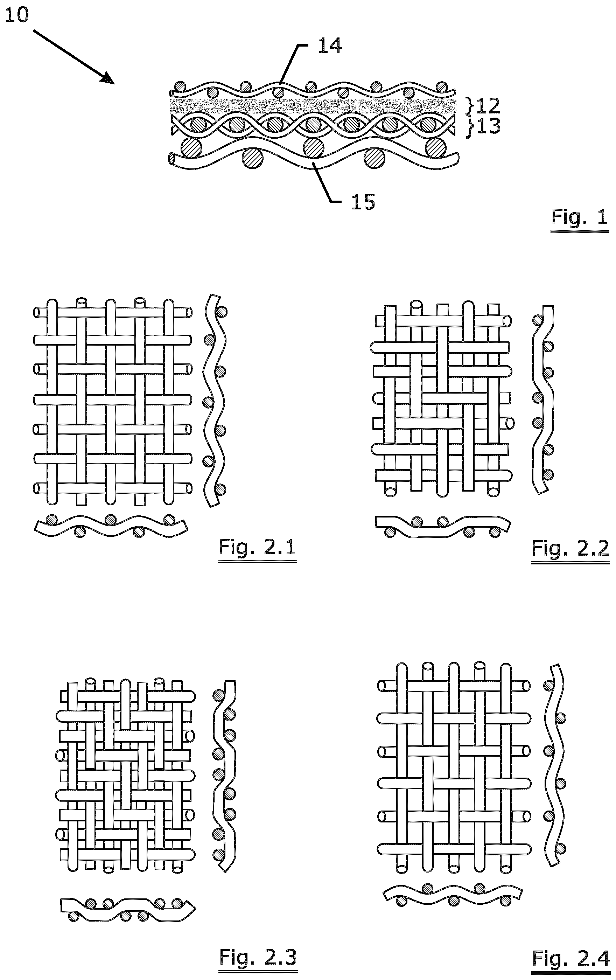

Referring to Fig. 1, a layered filter media structure 10 according to the invention comprises a first layer 12 of a sintered and compacted fiber web.

A filter media structure as shown in Fig. 1 can be made in the following way. Stainless Steel fibers are obtained by means of the technique of bundled drawing, such as described in U.S. Pat. No. 3,379,000. A first non-woven layer is then produced by means of a rando-feeder apparatus which transforms the steel fibers into a web such as disclosed in GB 1 190 844 (which corresponds to U.S. Pat. No. 3,469,297). The web is then sintered to obtain a porosity lower than 86%, This results in the first layer 12, which is similar to fiber media under trademark Bekipor^{®} 20 CL3.

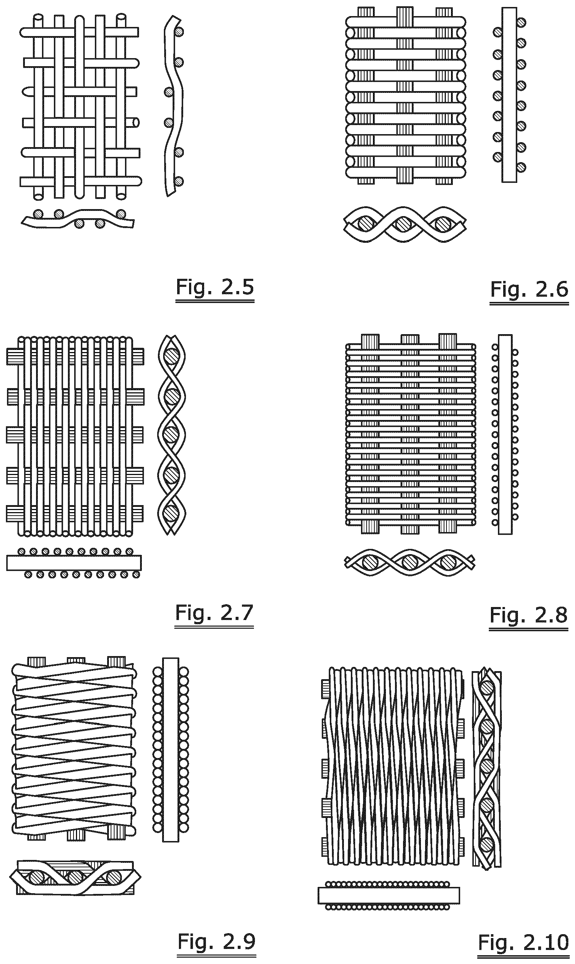

As a second layer 13, Dutch weave as shown in Fig. 2.6 to 2.10 can be applied. A Dutch weave as shown in Fig. 2.8 with high porosity is preferably used to form the second layer 13. Dutch weave with high porosity (40 to 50 %) gives best results since it has a very stable woven structure. The openings of such Dutch weave are very stable and not varying by the weaving conditions like pulling at end of roll or fluctuating wire diameter. For instance, the second layer 13 can be made from Multipor^{®} 40 weave, which is commercially available. Multipor^{®} 40 weave is a Dutch weave where the opening between two consecutive chute wires is smaller than the opening of the "filtration triangle". It is a Dutch weave with high porosity and better cleanability. The weight of the second layer is 18,712 g/m² and the thickness is about 0.30 mm.

The second layer 13 is put on the second wire mesh 15 and the first layer 12 is put with its even surface on the second layer 13. The first layer 12 and the second layer 13 are sintered together. The sintering is done at 900 °C to 1200 °C under protective atmosphere or vacuum for a few minutes to a few hours. A first wire mesh 14, which has been pre-rolled, is put on the first layer. The first wire mesh 14 and the second wire mesh 15 can have alternative weaving structure as shown in Fig. 2.1 to 2.5. As an example, the first wire mesh 14 has been rolled to a thickness of 0.17 mm and has 48 meshes per inch (1 inch = 25.4 mm). Its weight is 380 g/m². The second wire mesh 15 has a thickness of 0.45 mm and has 40 meshes per inch. Its weight is 1220 g/m².

The thus obtained layered assembly is not sintered together. According to the present invention, the first wire mesh 14 and the first layer 12 are non-sintered together, and the second layer 13 and the second wire mesh 15 are non-sintered together. The structure can be assembled in a spin pack under a light pressure e.g. by adding in the spin pack some coarse loose powder or glass beads above or on the layered filter media structure 10.

The layered filter media structure according to the invention has been subjected to a conventional textest for measuring the air permeability and a bubble point pressure test. Bubble point value of fiber media and Dutch weave need to be adjusted to guarantee minimal value. The Air permeability for example is 1700 L/dm²/min and Bubble point is 1825 Pa.

The material used for the filter media structure according to the invention may be conventional compositions such as stainless steel 316^{®}, Astelloy^{®}, Inconel^{®} or Nichrome^{®}. The latter composition can be applied for gas filtration at a high temperature

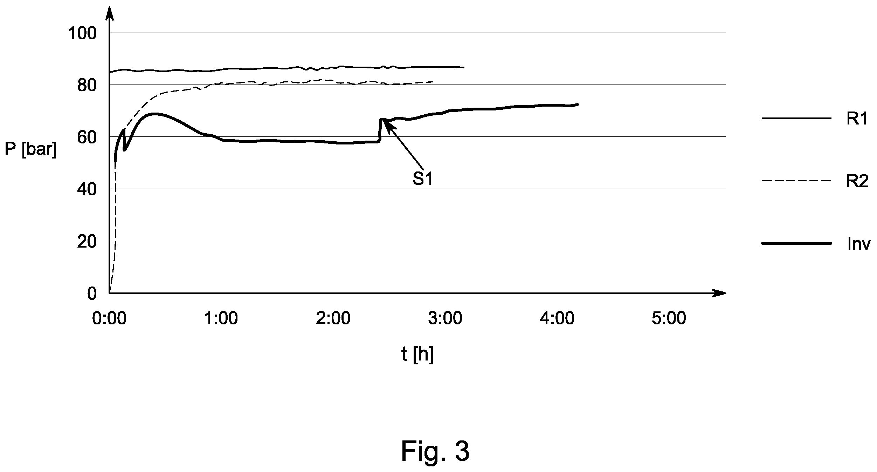

It has been noted that the filter media structure of the invention with Dutch weave has a small drop in applied pressure. Figure 3 shows spin pack pressure (in bar) over time (in hour) of an invention filter media structure in comparison with two other referenced filter media structures. Melt spinning polyester fibers involves feeding polyester into an extruder and from the extruder to a spinneret where the fiber exits the spinneret. The spin pack pressure before and after spinneret in a range of 60 to 100 bar can be measured. During spinning, the pressure of spin pack was measured as a function of trial runtime. Three types of filter media structure were individually tested in a spin pack. Filter media Reference 1 (R1 in Fig.3) is made from Bekipor^{®} 20 CL. Filter media Reference 2 (R2 in Fig.3) is made from Bekipor^{®} 20 CL and high-flow Dutch weave while the fiber media and high-flow Dutch weave are loosely packed by light pressure. Wire meshes are added on top and bottom of the filter media in the spin pack. Extrusion of polymer fiber material is table while using all three types of fiber media.

As shown in Fig. 3, filter media R1 and R2 were tested at a rotation speed of 6 rotation per minute (rpm), while for Invention media was first tested first at 5 rpm and after 2.5 hours (at point SI in Fig. 3) tested at 6 rpm. Taking maximum one hour, the pressure revolution/curve becomes flat off for all the three filter media indicating a constant pressure for all the spin packs. The higher the rotation speed, the more the polymer flow and the higher the spin pack pressure. The spin pack pressure at 6 rpm is higher than the pressure at 5 rpm. On the other hand, the spin pack pressure as a function of time of all three types of filter media were tested and compared at a rotation speed of 6 rpm. As shown in Fig. 3, filter media R1 shows the highest spin pack pressure (about 86 bar). The spin pack pressure of filter media R2 and Inv are lower. The invention filter media structure (Inv) has lowest spin pack pressure (below 72 bar). The invention filter media has about 20 to 30% lower pressure drop compared with referenced structure R1. In addition, the invention filter media structure has an extended lifetime. Using filter media R1 for filtering of partially oriented yarn out of recycled polyester, the lifetime of filter is about 3 days, while the lifetime of filter using the invention filter media structure can extend to 5 to 7 days. The extended lifetime of 50% to 100% extra is an advantage of the invention filter media structure.

## Claims

1. A layered filter media structure (10) comprising at least the following layers in sequence
a) a first wire mesh (14),
b) a first layer (12), comprising a non-woven web of metal fibers,
c) a second layer (13), being a woven Dutch weave,
d) a second wire mesh (15).
wherein the first wire mesh (14) and the first layer (12) are non-sintered together,
wherein the first layer (12) and the second layer (13) are sintered together, and
wherein the second layer (13) and the second wire mesh (15) are non-sintered together.

2. A layered filter media structure according to claim 1, wherein said Dutch weave is a plain Dutch weave, a Twill Dutch weave, a Reverse Dutch Twill weave or a reverse Dutch weave.

3. A layered filter media structure according to any one of the preceding claims, wherein the Dutch weave has a porosity in a range from 40 % to 50 %.

4. A layered filter media structure according to any one of the preceding claims, wherein said non-woven web of metal fibers has been double sintered.

5. A layered filter media structure according to any one of the preceding claims, wherein said first layer has a weight ranging between 300 g/m² and 600 g/m².

6. A layered filter media structure according to any one of the preceding claims, wherein said non-woven web of metal fibers has a porosity below 90%.

7. A layered filter media structure according to any one of the preceding claims, wherein said first layer comprises metal fibers with a diameter of less than 10µm.

8. A layered filter media structure according to any one of the preceding claims, wherein said first layer comprising a first sub-layer and a second sub-layer, said first sub-layer having a porosity below 55 % and said second sub-layer having a porosity at least 80 %.

9. A layered filter media structure according to any one of the preceding claims, wherein said first sub-layer comprises metal fibers with a diameter of less than 3 µm and wherein said second sub-layer comprises metal fibers with a diameter of at least three times the diameter of the fibers in the first sub-layer.

10. A layered filter media structure according to any one of the preceding claims, wherein said first layer is obtainable by means of a cold isostatic pressing operation.

11. A layered filter media structure according to any one of the preceding claims, wherein said first wire mesh has wires with a diameter which is thinner than the diameter of the wires in the second wire mesh.

12. A layered filter media structure according to any one of the preceding claims, wherein said first wire mesh and/ or the second wire mesh is a calendared wire mesh.

13. A method of filtering recycled polymer, wherein a layered filter media structure as in claims 1 to 13 are applied for filtering recycled polymer.

14. A method of filtering recycled polymer according to claim 13, wherein the recycled polymer is a in vacuum post-processed polyester.

15. A method of filtering recycled polymer according to claim 13 or 14, wherein pressure drop after said filtering is less than 72 bar.
